# EUROPEAN PATENT APPLICATION

(11) **EP 4 628 530 A1**
(43) Date of publication of application: **08.10.2025**
(21) Application number: 23897695.5
(22) Date of filing: 24.11.2023
(51) Int. Cl.: C08L 23/00, C08J 3/20, C08J 5/18, C08L 23/06, C08L 23/12, C08L 75/00, C08L 101/00

(54) **RECYCLED MATERIAL, FILM, SHEET AND METHOD FOR PRODUCING RECYCLED MATERIAL**

(30) Priority: 30.11.2022 JP 2022191310
(71) Applicant: Sumitomo Chemical Company, Limited, Tokyo 103-6020 (JP)
(72) Inventor: KAWAKAMI, Eiko, Chuo-ku, Tokyo 103-6020 (JP); IGAWA, Nao, Ichihara-shi, Chiba 299-0195 (JP)
(74) Representative: Winter, Brandl - Partnerschaft mbB
(86) International application number: PCT/JP2023/042211
(87) International publication number: WO 2024/117047

(57) **Abstract**

The present invention provides: a recycled material that has a relatively low variation coefficient of the tensile strength at break (%), which is a mechanical strength, after recycling; a film and a sheet, each of which uses this recycled material; and a method for producing this recycled material.

A recycled material according to the present invention comprises 70% by mass or more of a polyolefin; in a cross-section of a recycled article that is formed of this recycled material, there are a matrix, which is mainly composed of the polyolefin, and domains; and the average area of the domains is 0.3 µm² to 10 µm².

## Description

### TECHNICAL FIELD

The present invention relates to a recycled material, a film, a sheet, and a method for producing a recycled material.

### BACKGROUND ART

In May 2019, the Ministry of the Environment formulated "Plastic Resource Circulation Strategy", which stipulates that used plastics should be effectively utilized by 100% reuse, recycling, and the like by 2035. Under such a social situation, the demand for resin packaging materials suitable for material recycling is expected to further increase.

For example, a plastic (resin) film is frequently used as a laminated film including a plurality of layers having various functions. Such a laminated film is used for a single-use resin packaging material or the like. As an example, a laminated film constituting a resin packaging material is formed by laminating a substrate layer formed of a resin film such as a stretched nylon film or a polyethylene terephthalate (PET) film and a metal film such as aluminum, and a sealant layer including a polyethylene film or the like. Here, the substrate layer and the sealant layer may be laminated with an adhesive or the like interposed therebetween.

In material recycling, a laminated film including a substrate layer formed of a resin such as nylon or polyethylene terephthalate (PET) and a sealant layer formed of a polyethylene resin or the like has a problem that separation and collection are difficult because resins constituting the respective layers are different.

In order to solve this problem, a laminated film using the same kind of resins as the resins constituting the respective layers is known. For example, Patent Document 1 describes a film having a multilayer structure including a biaxially oriented polyethylene film containing linear low-density polyethylene having a predetermined density, an adhesive layer, and a sealant film, in which the biaxially oriented polyethylene film has an ultimate tensile strength of at least 60 MPa in at least one of a longitudinal direction and a lateral direction, the sealant film has an ultimate elongation of at least 300%, and the ultimate tensile strength is less than 50 MPa in at least one of the longitudinal direction and the lateral direction.

For example, Patent Document 2 describes a laminated film in which a layer A containing an ethylene polymer (A) containing 80 mol% or more of a structural unit derived from ethylene, a layer B containing an ethylene polymer (B) containing 70 mol% or more of a structural unit derived from ethylene and an inorganic filler, a layer C containing an ethylene polymer (C) containing 70 mol% or more of a structural unit derived from ethylene, at least one layer selected from the group consisting of a barrier layer and an adhesive layer, and a layer D containing an ethylene polymer (D) containing 70 mol% or more of a structural unit derived from ethylene are laminated in this order.

### PRIOR ART DOCUMENTS

### PATENT DOCUMENTS

Patent Document 1: JP-A-2018-520908
Patent Document 2: JP-A-2021-41641

### SUMMARY OF THE INVENTION

### PROBLEMS TO BE SOLVED BY THE INVENTION

However, when the film having a multilayer structure described in Patent Document 1, the laminated film described in Patent Document 2, or the like is recycled and used as a recycled material, a coefficient of variation of a tensile strength at break (%) after recycling is large, and therefore, further improvement in the stability of the mechanical strength of the recycled material is required.

The present invention has been made in view of such circumstances, and an object of the present invention is to provide a recycled material having a relatively low coefficient of variation of a tensile strength at break (%) after recycling, a film and sheet using the recycled material, and a method for producing the recycled material.

### MEANS FOR SOLVING THE PROBLEMS

A recycled material according to the present invention is a recycled material containing 70% by mass or more of a polyolefin,
in which in a cross-section of a recycled article that is formed of the recycled material, a matrix mainly containing a polyolefin and domains are present, and
an average area of the domains is 0.3 µm² or more and 10 µm² or less.

The film or sheet according to the present invention uses the recycled material described above as a raw material.

A method for producing a recycled material according to the present invention is a method for producing a recycled material, the method including melt-kneading a film and/or sheet including an adhesive layer and formed of a polyolefin,
in which the film or sheet is melt-kneaded at a melt-kneading temperature higher than a temperature at which an elastic modulus of the adhesive layer is 10,000 Pa.

### EFFECT OF THE INVENTION

According to the present invention, it is possible to provide a recycled material having a relatively low coefficient of variation of a tensile strength at break (%) after recycling, a film and sheet using the recycled material, and a method for producing the recycled material.

### BRIEF DESCRIPTION OF THE DRAWINGS

Fig. 1 is a view showing temperature dependency of a dynamic elastic modulus of an adhesive for dry lamination.
Fig. 2A is a view showing a binarized image of a cross section of a test piece in Example 1. Fig. 2B is a view showing a binarized image of a cross section of a test piece in Comparative Example 1.

### MODE FOR CARRYING OUT THE INVENTION

Hereinafter, embodiments of the present invention will be described, but the present invention is not limited to the following embodiments. The present invention is not limited to configurations described below, and various changes may be made within the scope of the claims. The technical scope of the present invention also includes embodiments and examples obtained by appropriately combining technical means disclosed in different embodiments and examples. In addition, unless otherwise specified herein, a numerical range expressed as "A to B" means "A or more and B or less".

A recycled material according to the present embodiment is a recycled material containing 70% by mass or more of a polyolefin, in which in a cross-section of a recycled article that is formed of the recycled material, a matrix mainly containing a polyolefin and domains are present, and an average area of the domains is 0.3 µm² or more and 10 µm² or less.

### <Polyolefin>

Examples of the polyolefin include polyethylene and polypropylene. The polyolefin is preferably polyethylene or polypropylene.

### (Polyethylene)

The polyethylene includes an ethylene-based polymer. Examples of the ethylene-based polymer include an ethylene homopolymer, a copolymer of ethylene and an α-olefin, and a copolymer of an α-olefin substituted with an alicyclic compound and ethylene. In addition, the ethylene-based polymer may be a mixture of an ethylene homopolymer and a copolymer of ethylene and an α-olefin. In addition, the amount of the structural unit derived from an α-olefin in the ethylene-based polymer is not particularly limited, and may be, for example, 4.0 to 20% by mass.

Examples of the ethylene homopolymer include high-pressure low-density polyethylene (LDPE) produced by high-pressure radical polymerization using a radical initiator. High-pressure low-density polyethylene (LDPE) is one in which ethylene of a repeating unit is randomly bonded with a branched structure. In addition, the high-pressure low-density polyethylene (LDPE) may have a density of, for example, 910 to 935 kg/m³.

Examples of the copolymer of ethylene and an α-olefin include a linear low-density polyethylene having crystallinity, and an elastomer of a copolymer of ethylene and an α-olefin having low crystallinity and rubber-like elastic properties.

A density of the linear low-density polyethylene may be, for example, 900 to 940 kg/m³. A density of the elastomer of the copolymer of ethylene and an α-olefin may be, for example, 860 to 900 kg/m³.

Examples of the α-olefin include an α-olefin having 3 to 10 carbon atoms. Examples of the α-olefin having 3 to 10 carbon atoms include propylene, 1-butene, 1-pentene, 1-hexene, 4-methyl-1-pentene, 1-octene, 1-decene, and 3-methyl-1-butene. The α-olefin having 3 to 10 carbon atoms is preferably an α-olefin having 4 to 10 carbon atoms, and more preferably 1-butene, 1-hexene, or 1-octene.

Examples of the copolymer of ethylene and an α-olefin include an ethylene-1-butene copolymer, an ethylene-1-hexene copolymer, an ethylene-1-octene copolymer, an ethylene-1-decene copolymer, and an ethylene-(3-methyl-1-butene) copolymer. In addition, the copolymer of ethylene and an α-olefin may be one of these copolymers, or may be a mixture of two or more copolymers.

Examples of the α-olefin substituted with an alicyclic compound include vinylcyclohexane.

A melt flow rate (MFR) of the ethylene-based polymer is preferably 0.5 to 50 g/10 min, more preferably 1 to 30 g/10 min, and still more preferably 1 to 20 g/10 min. Note that the MFR is measured by Method A defined in JIS K 7210-1-2014 under conditions of a temperature of 190°C and a load of 2.16 kg.

The ethylene-based polymer can be produced by a known polymerization method using a known polymerization catalyst.

Examples of the polymerization catalyst include a homogeneous catalyst system represented by a metallocene catalyst, a Ziegler catalyst system, and a Ziegler-Natta catalyst system. Examples of the homogeneous catalyst system include (i) a catalyst system composed of a cyclopentadienyl ring-containing transition metal compound of group 4 in the periodic table and alkylaluminoxane, (ii) a catalyst system composed of a cyclopentadienyl ring-containing transition metal compound of group 4 in the periodic table, a compound that forms an ionic complex by reacting with the cyclopentadienyl ring-containing transition metal compound, and an organoaluminum compound, (iii) a catalyst system modified by supporting, on an inorganic particle such as silica or clay mineral, catalyst components such as a cyclopentadienyl ring-containing transition metal compound of group 4 in the periodic table, a compound that forms an ionic complex, and an organoaluminum compound, and (iv) a pre-polymerization catalyst system prepared by pre-polymerizing ethylene or an α-olefin in the presence of the above catalyst system.

In addition, a radical initiator can be used as a polymerization catalyst of a high-pressure low-density polyethylene (LDPE).

### (Polypropylene)

The polypropylene contains a propylene-based polymer. Examples of the propylene-based polymer include a propylene homopolymer and a copolymer of ethylene and/or an α-olefin having 4 to 10 carbon atoms and propylene. In addition, the propylene-based polymer may be a mixture of a propylene homopolymer and a copolymer of ethylene and/or an α-olefin having 4 to 10 carbon atoms and propylene.

The propylene homopolymer may have a melt flow rate (MFR) of 0.1 to 50 g/10 min. Note that the MFR is measured at a temperature of 230°C and a load of 2.16 kg according to Method A defined in JIS K 7210-1-2014.

The copolymer of ethylene and/or an α-olefin having 4 to 10 carbon atoms and propylene may have a melt flow rate (MFR) of 10 to 200 g/10 min. Note that the MFR is measured at a temperature of 230°C and a load of 2.16 kg according to Method A defined in JIS K 7210-1-2014.

When the total mass of the copolymer of ethylene and/or an α-olefin having 4 to 10 carbon atoms and propylene is 100% by mass, a structural unit derived from ethylene and/or an α-olefin having 4 to 10 carbon atoms may be 0.1 to 40% by mass, and a structural unit derived from propylene may be 99.9 to 60% by mass.

Herein, the term "structural unit" such as the "structural unit derived from ethylene" refers to a polymerized unit of monomers. Accordingly, for example, the "structural unit derived from ethylene" refers to a structural unit of -CH₂CH₂-.

Examples of the α-olefin having 4 to 10 carbon atoms include 1-butene, 1-pentene, 1-hexene, 4-methyl-1-pentene, 1-octene, and 1-decene, and the α-olefin having 4 to 10 carbon atoms is preferably 1-butene, 1-hexene, or 1-octene.

Specific examples of the copolymer of ethylene and/or an α-olefin having 4 to 10 carbon atoms and propylene include a random copolymer of propylene and ethylene, a random copolymer of propylene and an α-olefin having 4 to 10 carbon atoms, a random copolymer of propylene, ethylene, and an α-olefin having 4 to 10 carbon atoms, and a propylene block copolymer. The copolymer of ethylene and/or an α-olefin having 4 to 10 carbon atoms and propylene may be one selected from these copolymers, or may be a mixture of two or more thereof.

Examples of the random copolymer of propylene and an α-olefin having 4 to 10 carbon atoms include a propylene-1-butene random copolymer, a propylene-1-hexene random copolymer, a propylene-1-octene random copolymer, and a propylene-1-decene random copolymer.

Examples of the random copolymer of propylene, ethylene, and an α-olefin having 4 to 10 carbon atoms include a propylene-ethylene-1-butene copolymer, a propylene-ethylene-1-hexene copolymer, a propyleneethylene-1-octene copolymer, a propylene-ethylene-1-decene copolymer.

The propylene-based polymer can be produced by a known polymerization method using a known olefin polymerization catalyst.

Examples of the polymerization catalyst include (i) a Ziegler catalyst system, (ii) a Ziegler-Natta catalyst system, (iii) a catalyst system composed of a cyclopentadienyl ring-containing transition metal compound of group 4 in the periodic table and alkylaluminoxane, (iv) a catalyst system composed of a cyclopentadienyl ring-containing transition metal compound of group 4 in the periodic table, a compound that forms an ionic complex by reacting with the cyclopentadienyl ring-containing transition metal compound, and an organoaluminum compound, (v) a catalyst system modified by supporting, on an inorganic particle such as silica or clay mineral, catalyst components such as a cyclopentadienyl ring-containing transition metal compound of group 4 in the periodic table, a compound that forms an ionic complex, and an organoaluminum compound, and (vi) a pre-polymerization catalyst system prepared by pre-polymerizing ethylene or an α-olefin in the presence of the above catalyst system.

### <Recycled material>

The recycled material according to the present embodiment is a recycled material containing 70% by mass or more of a polyolefin. From the viewpoint of improving the recyclability, the recycled material preferably contains 80% by mass or more of a polyolefin, more preferably 90% by mass or more of a polyolefin, and still more preferably 95% by mass or more of a polyolefin. In addition, the recycled material contains a polyolefin in an amount of preferably 99.5% by mass or less and more preferably 99% by mass or less.

In the recycled material according to the present embodiment, a matrix mainly containing a polyolefin and domains are present in a cross section of a recycled article formed of the recycled material. The matrix is derived from a polyolefin that is a base resin of the laminate as a base of the recycled material, and the domain is derived from a resin other than the base resin of the laminate, that is, an adhesive. Depending on the configuration of the laminate, the domain may be derived from an additive resin contained in the film or sheet of the laminate, a printing layer, a coating layer, a layer other than a polyolefin, or the like.

An average area of the domains present in the recycled article formed of the recycled material according to the present embodiment is 0.3 µm² or more and 10 µm² or less. The average area is preferably 6 µm² or less, more preferably 4 µm² or less, and still more preferably 3 µm² or less, from the viewpoint of the physical property stability. Note that the average area of the domains present in the recycled article can be obtained by a known method. The average area of the domains may be obtained, for example, by observing a cross section of the recycled article using a scanning electron microscope.

### <Adhesive>

In the recycled material according to the present embodiment, the domain is derived from an adhesive. The adhesive is preferably at least one selected from the group consisting of an epoxy-based adhesive, an acryl-based adhesive, a urethane-based adhesive, and a silicone-based adhesive.

As the adhesive, water-based and solvent-based adhesives for dry lamination may be used, or solventless adhesives for lamination may be used. In addition, as the adhesive, an adhesive containing an inorganic compound may be used.

### (Epoxy-based adhesive)

Examples of the epoxy-based adhesive include MAXIVE C93T (registered trademark) (manufactured by MITSUBISHI GAS CHEMICAL COMPANY, INC.) and MAXIVE M-100 (registered trademark) (manufactured by MITSUBISHI GAS CHEMICAL COMPANY, INC.).

### (Acrylic-based adhesive)

Examples of the acrylic-based adhesive include ORIBAIN 5448 (registered trademark) (manufactured by Toyochem Co., Ltd.).

### (Urethane-based adhesive)

Examples of the urethane-based adhesive include a polyether-based polyurethane adhesive and a polyester-based polyurethane adhesive. Examples of the polyurethane-based adhesive include TAKELAC (registered trademark) (manufactured by Mitsui Chemicals, Inc.) and TAKENATE (registered trademark) (manufactured by Mitsui Chemicals, Inc.).

### (Silicone-based adhesive)

Examples of the silicone-based adhesive include KR-3704 (registered trademark) (manufactured by Shin-Etsu Chemical Co., Ltd.).

### <Film or sheet>

The film or sheet according to the present embodiment uses the recycled material described above as a raw material.

The recycled material according to the present embodiment can be used as a material for forming various films or sheets. The film or sheet formed using the recycled material according to the present embodiment can be suitably used as, for example, a packaging bag for storing foods, detergents, cosmetics, and the like, and a packaging container. Note that, herein, the film and sheet are defined by a thickness according to JIS Z 0108-2012. The film has a thickness of less than 250 µm, and the sheet has a thickness of 250 µm or more.

In addition, a multilayer film obtained by laminating a film formed using the recycled material according to the present embodiment as a substrate film and a film formed using the same type of olefin-based polymer as the substrate film as a sealant film can be suitably used as a mono-material packaging material that can be reused without separating the substrate film and the sealant film. In addition, when a film formed using the recycled material according to the present embodiment is formed into the substrate film, the film can be suitably used as a packaging bag and a packaging container even when a film such as a polyethylene terephthalate (PET) film or a polyamide film is not laminated on the substrate film. In addition, the same applies to the sheet.

A method for producing a film or sheet using the recycled material according to the present embodiment is not particularly limited, and examples thereof include known methods for producing a film or sheet, for example, an inflation method using an inflation film producing apparatus, and an extrusion molding method such as a T-die method using a T-die cast film producing apparatus. When the T-die method is used, a processing resin temperature is 180°C to 300°C and preferably 200°C to 300°C. In addition, a chill roll temperature is 20°C to 80°C and preferably 20°C to 60°C.

A method for producing a recycled material according to the present embodiment is a method for producing a recycled material, the method including melt-kneading a film and/or sheet including an adhesive layer and formed of a polyolefin, in which the film or sheet is melt-kneaded at a melt-kneading temperature higher than a temperature at which an elastic modulus of the adhesive layer is 10,000 Pa.

A known melt-kneader may be used for a method for melt-kneading a film and/or sheet including an adhesive layer and formed of a polyolefin. Examples of the known melt-kneader include a single-screw kneader, a twin-screw kneader, a Banbury mixer, and a heat roll. In the method for producing a recycled material according to the present embodiment, the melt-kneader used for melt-kneading is preferably a single-screw kneader or a twin-screw kneader.

A temperature at which the film and/or sheet including an adhesive layer and formed of a polyolefin is melt-kneaded is a melt-kneading temperature higher than a temperature at which an elastic modulus of the adhesive layer is 10,000 Pa. From the viewpoint of improving the adhesive dispersibility, the temperature at which melt-kneading is performed is preferably a melt-kneading temperature higher than a temperature at which an elastic modulus of the adhesive layer is 9,000 Pa, and more preferably a melt-kneading temperature higher than a temperature at which an elastic modulus of the adhesive layer is 8,000 Pa. Note that a dynamic elastic modulus of the adhesive layer at each temperature may be measured by a known method. For the measurement of the dynamic viscoelasticity of the adhesive layer, for example, a dynamic viscoelasticity measuring device or the like can be used.

The temperature at which the film and/or sheet including an adhesive layer and formed of a polyolefin is melt-kneaded is preferably 150°C or higher. The temperature at which the melt-kneading is performed is more preferably 160°C or higher and 300°C or lower, still more preferably 160°C or higher and 280°C or lower, and particularly preferably 160°C or higher and 250°C or lower, from the viewpoint of improving dispersibility, improving processability, and suppressing thermal degradation.

The present invention is not limited to the description of the above-described embodiments, but may be altered by those skilled in the art within the scope of the claims. An embodiment based on an appropriate combination of technical means disclosed in different embodiments is encompassed in the technical scope of the present invention.

The present invention includes the following aspects.
[1] A recycled material containing 70% by mass or more of a polyolefin,
   in which in a cross-section of a recycled article that is formed of the recycled material, a matrix mainly containing a polyolefin and domains are present, and
   an average area of the domains is 0.3 µm² or more and 10 µm² or less.
[2] The recycled material according to [1], in which the polyolefin is polyethylene or polypropylene.
[3] The recycled material according to [1] or [2], in which the domain is derived from an adhesive, and the adhesive is at least one selected from the group consisting of an epoxy-based adhesive, an acryl-based adhesive, a urethane-based adhesive, and a silicone-based adhesive.
[4] A film or sheet comprising the recycled material according to any one of [1] to [3] as a raw material.
[5] A method for producing a recycled material, the method comprising melt-kneading a film and/or sheet including an adhesive layer and formed of a polyolefin,
   in which the film or sheet is melt-kneaded at a melt-kneading temperature higher than a temperature at which an elastic modulus of the adhesive layer is 10,000 Pa.
[6] The method for producing a recycled material according to [5], in which a melt-kneading temperature is 150°C or higher.
[7] The method for producing a recycled material according to [5] or [6], in which a melt-kneader for melt-kneading is used, and
   the melt-kneader is a single-screw kneader or a twin-screw kneader.

### EXAMPLES

Hereinafter, the present invention will be described in more detail with reference to Examples. However, the present invention is not limited to these Examples.

(1) Methods for measuring a density and a melt flow rate are as follows.

### (1-1) Density of ethylene polymer (unit: kg/m³)

After the annealing treatment described in JIS K6760-1995 was performed, a density (unit: kg/m³) of an ethylene polymer was measured by Method A according to JIS K7112-1980.

### (1-2) Melt flow rate of ethylene polymer (MFR, unit: g/10 min)

An MFR (unit: g/10 min) of an ethylene polymer was measured by Method A according to JIS K7210-1-2014 under conditions of a temperature of 190°C and a load of 2.16 kg.

### (1-3) Melt flow rate of propylene-based polymer (MFR, unit: g/10 min)

An MFR of a propylene-based polymer was measured by Method A according to JIS K7210-1-2014 under conditions of a temperature of 230°C and a load of 2.16 kg.

(2) Materials used in examples and comparative examples are as follows.

### (2-1) Ethylene polymer

· Ethylene polymer 1
   Ethylene-α-olefin copolymer, trade name "G2500", manufactured by Keiyo Polyethylene Co., Ltd., density: 960 kg/m³, MFR: 5 g/10 min
· Ethylene polymer 2
   Ethylene-α-olefin copolymer, trade name "E8080", manufactured by Keiyo Polyethylene Co., Ltd., density: 958 kg/m³, MFR: 1.0 g/10 min
· Ethylene polymer 3
   Ethylene-hexene copolymer, trade name "SUMIKASEN E (registered trademark) FV201", manufactured by Sumitomo Chemical Co., Ltd., production method: gas phase polymerization using metallocene catalyst, density: 916 kg/m³, MFR: 2.3 g/10 min

### (2-2) Propylene-based polymer

### · Propylene polymer 1

Polypropylene polymer, trade name "FL6737", manufactured by Sumitomo Chemical Co., Ltd., MFR: 6.0 g/10 min

### (2-3) Substrate film

### · Substrate film 1

Uniaxially stretched polyethylene film, trade name "Hibron", manufactured by Tokyo Printing Ink Mfg. Co., Ltd., thickness: 25 µm

### · Substrate film 2

Biaxially stretched polypropylene film, trade name "PYLEN (registered trademark) Film-OT", manufactured by TOYOBO CO., LTD., thickness: 20 µm, single side corona treatment

### (2-4) Inorganic filler

### · Inorganic filler 1

Talc, trade name "JM620P", manufactured by Asada Milling Co., Ltd., median diameter (d50) 5 µm

### (2-5) Adhesive for dry lamination

· Adhesive for dry lamination 1
   Adhesive for dry lamination (production method: obtained by mixing 12 parts by mass of TAKELAC (registered trademark) A310 (manufactured by Mitsui Chemicals, Inc.), 1 part by mass of TAKENATE (registered trademark) A-3 (manufactured by Mitsui Chemicals, Inc.), and 15 parts by mass of ethyl acetate)
· Adhesive for dry lamination 2
   Adhesive for dry lamination (production method: obtained by mixing 10 parts by mass of TAKELAC (registered trademark) A525 (manufactured by Mitsui Chemicals, Inc.), 1 part by mass of TAKENATE (registered trademark) A-52 (manufactured by Mitsui Chemicals, Inc.), and 15 parts by mass of ethyl acetate)

(3) Methods for measuring various physical properties are as follows.

### (3-1) Average particle area of domains (unit: µm²)

A melt-kneaded product was hot-pressed to a thickness of 1.0 mm to obtain a pressed sheet. A test piece having a width of about 5 mm and a length of about 10 mm was cut out from the obtained press-molded sheet and trimmed (chamfered). After the trimming, the test piece was cut with a glass knife at -60°C using an ultramicrotome to perform leveling, thereby preparing a smooth observation surface having a width of about 3 mm and a thickness of about 0.3 mm. The test piece subjected to the leveling (planarization) was dyed in vapor of a 1% RuO₄ aqueous solution at 60°C for 90 minutes. The cross section subjected to dyeing and leveling was cut again using an ultramicrotome so as to have a smooth observation surface.

The test piece subjected to dyeing and leveling was cut into an appropriate length, and attached to a sample fixing table for a scanning electron microscope (SEM) using a conductive tape, and Pt-Pd was deposited by ion sputtering E-1030 (HITACHI). Coating was performed so that a thickness of Pt-Pd was about 2 nm under settings of a vacuum degree of about 6 Pa, a discharge current of 15 mA, and a coating time of 20 seconds.

Using a scanning electron microscope JSM-7600F (JEOL), the dyed and leveled observation surface was observed under the observation conditions of an acceleration voltage of 10 kV, a work distance of 15.0 mm, and an observation magnification of 500 times. The reflected electron image was acquired as image data.

Image processing was performed using general-purpose image processing software Nano Hunter NS2K-Pro (Nanosystem Corporation). A region to be subjected to image processing was set from the original image. Binarization was performed using a discriminant analysis method (full screen), and filling and noise removal were performed. Particles having an area of 0 µm² to 0.1 µm² were removed as noise. An average particle area was determined from the binarized image obtained by the image processing.

### (3-2) Dynamic elastic modulus of adhesive layer (unit: Pa)

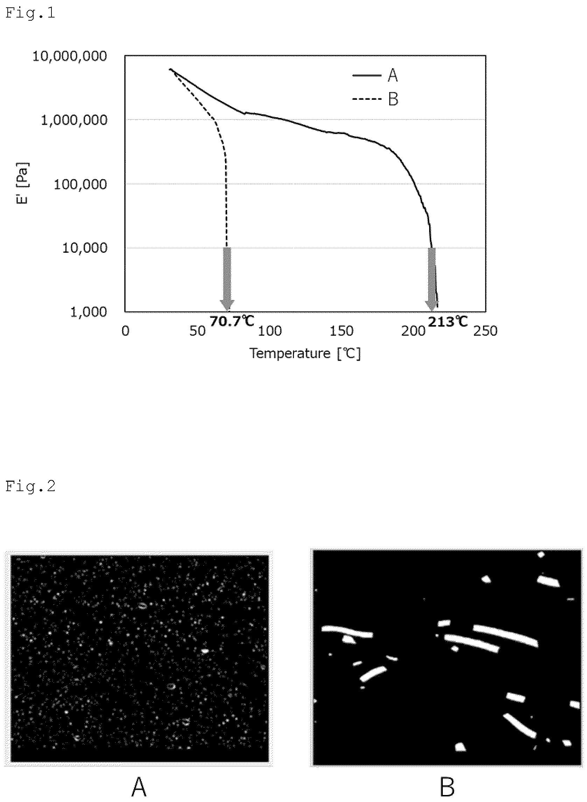

An adhesive for dry lamination was air-dried on a Teflon (registered trademark) sheet to obtain an adhesive thin film. The obtained adhesive thin film was heat-pressed in a vacuum at 230°C to obtain a press sheet having a thickness of 0.3 mm. The obtained sheet was sampled to a test piece width of 3 mm and a test piece length of 50 mm, and a dynamic elastic modulus was measured by RSA-G2 at a distance between chucks of 20 mm at a temperature of 30 to 230°C, a temperature rise rate of 3 °C/min, a frequency of 5 Hz, and a strain of 0.5%. The temperature dependence of the dynamic elastic moduli of the adhesive for dry lamination 1 and the adhesive for dry lamination 2 is illustrated in Fig. 1. In Fig. 1, the solid line A represents the adhesive for dry lamination 1, and the broken line B represents the adhesive for dry lamination 2. In addition, Fig. 1 shows that the temperature at which the dynamic elastic modulus is 10,000 Pa is 213°C for the adhesive for dry lamination 1 and 70.1°C for the adhesive for dry lamination 2.

(4) The evaluation method by the tensile test is as follows.

A melt-kneaded product was hot-pressed to a thickness of 0.1 mm to obtain a pressed film. The obtained pressed film was punched with a JIS7114-2 dumbbell to obtain a test piece. Using an impact tester (CIT-150-T-20) manufactured by ORIENTEC CO., LTD., a tensile test of a test piece was performed at a grip interval of 80 mm and a tensile speed of 200 mm/min in an atmosphere of 23°C and a humidity of 50%. The tensile elongation at break obtained by the tensile test was determined, and the coefficient of variation for five tests was determined.

### [Example 1]

30 parts by mass of an ethylene polymer 1, 70 parts by mass of an inorganic filler 1, 0.2 parts by mass of a lubricant 1 (zinc stearate ZNS-F, manufactured by ADEKA Corporation), and 0.2 parts by mass of an antioxidant 1 (Sumilizer GP, manufactured by Sumitomo Chemical Co., Ltd.) were stirred at a temperature of 190°C under a nitrogen gas atmosphere using a super mixer (trade name "SMV-100", manufactured by KAWATA MFG. CO., LTD.) to obtain a mixture. The obtained mixture was melt-kneaded at a temperature of 220 to 240°C and a screw rotation speed of 100 rpm using a co-directional biaxial extruder (trade name "KTX-37", manufactured by KOBE STEEL, LTD., screw diameter: 37 mmφ) to obtain master batch pellets 1 (MB1).

A three-layer T-die film having a layer configuration of layer A (ethylene polymer 2: 100 parts by mass, thickness: 6 µm)/layer B (master batch pellets 1: 43 parts by mass, ethylene polymer 1: 57 parts by mass, thickness: 13 µm)/layer C (ethylene polymer 3: 100 parts by mass, thickness: 6 µm) was molded using a small multilayer T-die (manufactured by SHI Modern Machinery, Ltd.). Next, the surface of the obtained film on the layer C was subjected to a corona treatment to obtain a T-die film 1. Table 1 shows the layer configuration of the T-die film 1. Note that the molding conditions and corona treatment conditions were as follows.

### <Molding conditions>

· Extruder: φ50 mm × 2 extruders, φ40 mm × 1 extruder
· Die opening length: 600 mm
· Lip: 1.2 mm
· Processing temperature of layer A: 230°C
· Extrusion conditions for layer A: 2.5 kg/hr
· Processing temperature of layer B: 210°C
· Extrusion conditions for layer B: 5 kg/hr
· Processing temperature of layer C: 230°C
· Extrusion conditions for layer C: 2.5 kg/hr

### <Corona treatment conditions>

· Corona processor: AGF-B 10 type manufactured by Wedge Co., Ltd.
· Corona output: 0.15 kW

**[Table 1]**

| | | | T-die film 1 |
|---|---|---|---|
| Layer A | Ethylene polymer 2 (parts by mass) | | 100 |
| | Thickness (µm) | | 6 |
| Layer B | MBI | Ethylene polymer 1 (parts by mass) | 13 |
| | | Inorganic filler (parts by mass) | 30 |
| | Total of MB1 (parts by mass) | | 43 |
| | Ethylene polymer 1 (parts by mass) | | 57 |
| | Total of ethylene polymer 1 (parts by mass) | | 70 |
| | Total of inorganic filler (parts by mass) | | 30 |
| | Thickness (µm) | | 13 |
| Layer C | Ethylene polymer 3 (parts by mass) | | 100 |
| | Thickness (µm) | | 6 |

An inflation film of the layer D (ethylene polymer 3: 100 parts by mass, thickness: 120 µm) was molded using a three-layer coextrusion inflation film molding machine (manufactured by PLACO CO., LTD.). Next, the surface of the obtained inflation film was subjected to a corona treatment to obtain a sealant film 1. Table 2 shows the layer configuration of the sealant film 1. Note that the molding conditions and corona treatment conditions were as follows.

### <Molding conditions>

· Extruder: φ50 mm × 3 extruders
· Die: φ150 mm, lip: 2.0 mmt
· Set temperature of die: 180 to 190°C
· Processing temperature of layer D: 180 to 190°C
· Extrusion conditions for layer D: 30 kg/hr
· Fold diameter: 470 mm

### <Corona treatment conditions>

· Corona processor: AGF-B 10 type manufactured by Wedge Co., Ltd.
· Corona output: 0.2 kW

**[Table 2]**

| | | Sealant film | |
|---|---|---|---|
| | | 1 | 2 |
| Layer D | Ethylene polymer 3 (parts by mass) | 100 | 0 |
| | Propylene polymer 1 (parts by mass) | 0 | 100 |
| | Thickness (µm) | 120 | 120 |

The corona-treated surface of the T-die film 1 and the corona-treated surface of the sealant film 1 were bonded to each other by a dry lamination method with the adhesive for dry lamination 1 interposed therebetween to obtain a laminated film 1 having a five-layer configuration of layer A/layer B/layer C/adhesive layer/layer D. Table 3 shows the layer configuration of the laminated film 1.

40 g of the laminated film 1 was melt-kneaded at a kneading temperature of 230°C and a rotation speed of 25 rpm for 10 minutes in Labo Plastomill (model: 3S150) manufactured by Toyo Seiki Seisaku-sho, Ltd., thereby obtaining a melt-kneaded product 1. The melt-kneaded product 1 was hot-pressed at 150°C to prepare a press sheet, and a coefficient of variation of a tensile elongation at break was evaluated. The evaluation results are shown in Table 4. In addition, Fig. 2A illustrates a binarized image of a cross section of a test piece obtained by pressing the melt-kneaded product 1.

### [Example 2]

A laminated film 2 was obtained under the same conditions as those in Example 1, except that the adhesive for dry lamination 1 was replaced with the adhesive for dry lamination 2. Table 3 shows the layer configuration of the laminated film 2.

Melt-kneading was performed under the same conditions as those in Example 1, except that the kneading temperature of the laminated film 2 was changed from 230°C to 170°C, thereby obtaining a melt-kneaded product 2. The melt-kneaded product 2 was hot-pressed at 150°C to prepare a press sheet, and a coefficient of variation of a tensile elongation at break was evaluated. The evaluation results are shown in Table 4.

### [Example 3]

A laminated film 3 was obtained under the same conditions as those in Example 1, except that the T-die film 1 was replaced with the substrate film 1. Table 3 shows the layer configuration of the laminated film 3.

The laminated film 3 was melt-kneaded under the same conditions as those in Example 1 to obtain a melt-kneaded product 3. The melt-kneaded product 3 was hot-pressed at 150°C to prepare a press sheet, and a coefficient of variation of a tensile elongation at break was evaluated. The evaluation results are shown in Table 4.

### [Example 4]

A laminated film 4 was obtained under the same conditions as those in Example 3, except that the adhesive for dry lamination 1 was replaced with the adhesive for dry lamination 2. Table 3 shows the layer configuration of the laminated film 4.

The laminated film 4 was melt-kneaded under the same conditions as those in Example 2 to obtain a melt-kneaded product 4. The melt-kneaded product 4 was hot-pressed at 150°C to prepare a press sheet, and a coefficient of variation of a tensile elongation at break was evaluated. The evaluation results are shown in Table 4.

### [Example 5]

A single-layer cast film of the layer D (propylene polymer 1: 100 parts by mass, thickness: 120 µm) was molded using a small single-layer T-die (manufactured by TANABE PLASTICS MACHINERY CO., LTD.). Next, the chill roll surface of the obtained film was subjected to a corona treatment to obtain a sealant film 2. Table 2 shows the layer configuration of the sealant film 2. Note that the molding conditions and corona treatment conditions were as follows.

### <Molding conditions>

· Extruder: φ50 mm × 1
· Die opening length: 400 mm
· Lip: 0.8 mm
· Processing temperature of layer D: 250°C
· Extrusion conditions for layer D: 10 kg/hr

### <Corona treatment conditions>

· Corona processor: AGF-B 10 type manufactured by Wedge Co., Ltd.
· Corona output: 0.15 kW

The corona-treated surface of the substrate film 2 and the corona-treated surface of the sealant film 2 were bonded to each other by a dry lamination method with the adhesive for dry lamination 1 interposed therebetween to obtain a laminated film 5. Table 3 shows the layer configuration of the laminated film 5.

The laminated film 5 was melt-kneaded under the same conditions as those in Example 1 to obtain a melt-kneaded product 5. The melt-kneaded product 5 was hot-pressed at 230°C to prepare a press sheet, and a coefficient of variation of a tensile elongation at break was evaluated. The evaluation results are shown in Table 4.

### [Example 6]

A laminated film 6 was obtained under the same conditions as those in Example 5, except that the adhesive for dry lamination 1 was replaced with the adhesive for dry lamination 2. Table 3 shows the layer configuration of the laminated film 5.

The laminated film 6 was melt-kneaded under the same conditions as those in Example 2 to obtain a melt-kneaded product 6. The melt-kneaded product 6 was hot-pressed at 230°C to prepare a press sheet, and a coefficient of variation of a tensile elongation at break was evaluated. The evaluation results are shown in Table 4.

### [Comparative Example 1]

Melt-kneading was performed under the same conditions as those in Example 1, except that the kneading temperature of the laminated film 1 was changed from 230°C to 170°C, thereby obtaining a melt-kneaded product 7. The melt-kneaded product 7 was hot-pressed at 150°C to prepare a press sheet, and a coefficient of variation of a tensile elongation at break was evaluated. The evaluation results are shown in Table 4. In addition, Fig. 2B illustrates a binarized image of a cross section of a test piece obtained by pressing the melt-kneaded product 7.

### [Comparative Example 2]

Melt-kneading was performed under the same conditions as those in Example 1, except that the kneading temperature of the laminated film 3 was changed from 230°C to 170°C, thereby obtaining a melt-kneaded product 8. The melt-kneaded product 8 was hot-pressed at 150°C to prepare a press sheet, and a coefficient of variation of a tensile elongation at break was evaluated. The evaluation results are shown in Table 4.

### [Comparative Example 3]

Melt-kneading was performed under the same conditions as those in Example 1, except that the kneading temperature of the laminated film 5 was changed from 230°C to 170°C, thereby obtaining a melt-kneaded product 9. The melt-kneaded product 9 was hot-pressed at 230°C to prepare a press sheet, and a coefficient of variation of a tensile elongation at break was evaluated. The evaluation results are shown in Table 4.

**[Table 3]**

| | | Laminated film | | | | | |
|---|---|---|---|---|---|---|---|
| | | 1 | 2 | 3 | 4 | 5 | 6 |
| Layer configuration | Substrate film | T-die film 1 | | Substrate film 1 | | Substrate film 2 | |
| | Adhesive for dry lamination | 1 | 2 | 1 | 2 | 1 | 2 |
| | Sealant film | 1 | | | | 2 | |

**[Table 4]**

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Melt-kneaded product | | 1 | 2 | 3 | 4 | 5 | 6 | 7 | 8 | 9 |
| Preparation conditions | Laminated film | 1 | 2 | 3 | 4 | 5 | 6 | 1 | 3 | 5 |
| | Kneading temperature (°C) | 230 | 170 | 230 | 170 | 230 | 170 | | | |
| | Press temperature (°C) | 150 | | | | 230 | | 150 | | 230 |
| Average particle area of domains (µm²) | | 0.63 | 2.10 | 0.60 | 1.97 | 2.04 | 2.07 | 64.14 | 101.28 | 16.17 |
| Coefficient of variation of tensile elongation at break | | 0.12 | 0.14 | 0.04 | 0.19 | 0.16 | 0.06 | 0.68 | 0.42 | 1.06 |

As can be seen from Table 4, in Examples 1 to 6 satisfying all the constituent requirements of the present invention, the coefficient of variation of the tensile elongation at break was smaller than those in Comparative Examples 1 to 3. Therefore, it was shown that the recycled material of the present invention had a relatively small coefficient of variation of a tensile strength at break (%) after recycling. In addition, from Examples 1 to 6, it was shown that a recycled material having a relatively small coefficient of variation of a tensile strength at break (%) after recycling was produced by melt-kneading a film including an adhesive layer and formed of a polyolefin at a melt-kneading temperature higher than a temperature at which an elastic modulus of the adhesive layer was 10,000 Pa.

### INDUSTRIAL APPLICABILITY

Since the recycled material of the present invention is a recycled material having a relatively small coefficient of variation of a tensile strength at break (%), which is a mechanical strength, after recycling, the recycled material is suitably used for various kinds of packaging materials suitable for material recycling, for example, daily necessity packaging materials and food packaging materials. In addition, as a form, for example, it is suitably used for a three-way bag, a four-way bag, a standing pouch, a pillow bag, or the like.

## Claims

1. A recycled material comprising 70% by mass or more of a polyolefin,
wherein in a cross-section of a recycled article that is formed of the recycled material, a matrix mainly containing a polyolefin and a domain are present, and
an average area of the domain is 0.3 µm² or more and 10 µm² or less.

2. The recycled material according to claim 1, wherein the polyolefin is polyethylene or polypropylene.

3. The recycled material according to claim 1 or 2, wherein the domain is derived from an adhesive, and the adhesive is at least one selected from the group consisting of an epoxy-based adhesive, an acryl-based adhesive, a urethane-based adhesive, and a silicone-based adhesive.

4. A film or sheet comprising the recycled material according to claim 1 or 2 as a raw material.

5. A method for producing a recycled material, the method comprising melt-kneading a film and/or sheet comprising an adhesive layer and formed of a polyolefin,
wherein the film or sheet is melt-kneaded at a melt-kneading temperature higher than a temperature at which an elastic modulus of the adhesive layer is 10,000 Pa.

6. The method for producing a recycled material according to claim 5, wherein a melt-kneading temperature is 150°C or higher.

7. The method for producing a recycled material according to claim 5 or 6, wherein a melt-kneader for melt-kneading is used, and
the melt-kneader is a single-screw kneader or a twin-screw kneader.
